# EUROPEAN PATENT SPECIFICATION

(11) **EP 3 777 447 B1**
(45) Date of publication and mention of the grant of the patent: **22.11.2023**
(21) Application number: 18914437.1
(22) Date of filing: 09.04.2018
(51) Int. Cl.: H04W 76/11, H04W 36/00

(54) **APPARATUS, METHOD AND COMPUTER PROGRAM**
VORRICHTUNG, VERFAHREN UND COMPUTERPROGRAMM
APPAREIL, PROCÉDÉ ET PROGRAMME INFORMATIQUE

(43) Date of publication of application: 17.02.2021
(73) Proprietor: Nokia Technologies Oy, 02610 Espoo (FI)
(72) Inventor: CHAO, Hua, Shanghai 201206 (CN); URIE, Alistair, 92103 Issy (FR)
(74) Representative: Kolster Oy Ab
(86) International application number: PCT/CN2018/082366
(87) International publication number: WO 2019/195984

(56) References cited:
- WO-A1-2018/055059
- HUAWEI ET AL: "Session management for connectionless transmission", 3GPP DRAFT; S2-165757 SESSION MANAGEMENT FOR CONNECTIONLESS TRANSMISSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. SA WG2, no. Kaohsiung city, Taiwan; 20161017 - 20161021 11 October 2016 (2016-10-11), XP051169731, Retrieved from the Internet: URL:http://www.3gpp.org/ftp/tsg_sa/WG2_Arc h/TSGS2_117_Kaohsiung_City/Docs/ [retrieved on 2016-10-11]
- NOKIA ET AL: "Connectionless data transmission", 3GPP DRAFT; R2-1700105 DISCUSSONCONNECTIONLESS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170117 - 20170119 17 January 2017 (2017-01-17), XP051210691, Retrieved from the Internet: URL:http://www.3gpp.org/ftp/Meetings_3GPP_ SYNC/RAN2/Docs/ [retrieved on 2017-01-17]
- LG ELECTRONICS: "Evaluation of Solution 4.8: for Data transmission with ConnectionLess RAN-Core interface", SA WG2 Meeting #117, S2-165745, 21 October 2016 (2016-10-21), XP051155329,
- NOKIA et al.: "Update to solution 6.4.8", SA WG2 Meeting #116bis, S2-165119, 2 September 2016 (2016-09-02), XP051154414,
- NOKIA et al.: "Updates to solution 4.8: for Data transmission with ConnectionLess RAN-Core interface", SA WG2 Meeting #116, S2-164069, 15 July 2016 (2016-07-15), XP051118581,

## Description

### Field

The present application relates to a method, apparatus, system and computer program and in particular but not exclusively to network coordination for connectionless transmission in 5G Internet of things (IoT).

### Background

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). The wireless systems can typically be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

Huawei et al: "Session management for connectionless transmission", 3GPP Draft; S2-1 65757 Session Management for Connectionless Transmission, 3RD Generation Partnership Project (3GPP), Mobile Competence Centre; 650, Route Des Lucioles; F-06921 Sophia-Antipolis Cedex, vol. SA WG2, no. Kaohsiung city, Taiwan; 20161017 - 20161021 11 October 201 6 (2016-10-11), XP0511 69731 discusses mobility support for connectionless transmission.

### Summary

The invention is set out by the appended independent claims. Further embodiments are provided by the dependent claims. If

In a first aspect there is provided a radio access network apparatus, said apparatus comprising means for: receiving a configuration request from a user equipment, the configuration request comprising a connectionless service identifier; and providing to the user equipment and to a core network function an updated location validity timer value based on the request and radio access network configuration and associated with the connectionless service identifier to update an initial location validity timer value for storage as context information.

The apparatus may comprise means for determining if the connectionless service identifier is valid.

An initial location validity timer value may be negotiated by the user equipment and a core network function based on the user equipment's subscription information.

The configuration request may comprise the initial location validity timer value.

The apparatus may comprise means for receiving an initial data transmission from the user equipment, said data comprising the connectionless service identifier, determining if the apparatus has a logical connection with a user plane function associated with the connectionless service identifier and, if so, providing an indication to the user plane function to start the stored location validity timer.

The apparatus may comprise means for receiving an initial data transmission from the user equipment, said data comprising the connectionless service identifier, determining if the apparatus has a logical connection with a user plane function associated with the connectionless service identifier and at least one of allocating an updated shorter identifier, to be used in the radio interface instead of connectionless service identifier for subsequent uplink connectionless data transmission and an updated UE location freshness timer to the user equipment and providing an indication to a control plane function to request a context information update associated with the connectionless service if not.

The apparatus may comprise means for receiving updated context information from the control plane function.

The apparatus may comprise means for providing the updated context information to the user equipment.

The updated context information may comprise an updated connectionless service identifier.

The updated context information may comprise an updated location validity timer value.

The apparatus may comprise means for providing a message to the control plane function that context information has been updated.

The updated context information may be provided to the user plane function by the control plane function on receipt of the message.

In a second aspect there is provided user equipment apparatus, said apparatus comprising means for: receiving an initial location validity timer value for a connectionless service from a core network function; providing a configuration request to a first radio access network, the configuration request comprising a connectionless service identifier; and receiving an updated location validity timer value based on the request and radio access network configuration and associated with the connectionless service identifier from the first radio access network for storage as context information.

The connectionless service identifier may be used to determine the validity of the connectionless service identifier.

The initial location validity timer value may be negotiated with the core network function in dependence on the apparatus's subscription information.

The apparatus may comprise means for receiving a shorter identifier from the radio access network, to be used in a radio interface instead of connectionless service identifier for subsequent uplink connectionless data transmission.

The configuration request may comprise the initial location validity timer value.

The apparatus may comprise means for providing a dummy data transmission to a radio access network node, wherein the radio access node is not associated with a radio access network previously associated with the user equipment.

The apparatus may comprise means for providing an initial data transmission to a radio access network node, the data comprising a connectionless service identifier, determining if the radio access network node is associated with the first radio access network and, if so, initiating the location validity timer.

The apparatus may comprise means for receiving updated context information from a radio access node.

The updated context information may comprise an updated connectionless service identifier.

The updated context information may comprise an updated location validity timer value.

In a third aspect, there is a core network function apparatus comprising means for: providing an initial location validity timer value to a user equipment for a connectionless service; and receiving an updated location validity timer value based on an user equipment request and radio access network configuration and associated with the connectionless service identifier from the radio access network for storage as context information.

The apparatus may comprise means for receiving a request from a radio access network to determine if a connectionless service identifier is valid.

The apparatus may comprise means for negotiating the initial location validity timer value with the user equipment in dependence on the user equipment's subscription information.

The apparatus may comprise means for receiving an indication from a radio access network node to request a context information update associated with the connectionless service; updating the context information and providing the updated context information to the radio access network node.

The updated context information may comprise an updated connectionless service identifier.

The updated context information may comprise an updated location validity timer value.

The apparatus may comprise means for receiving a message that context information has been updated.

The apparatus may comprise means for providing updated context information to a user plane function on receipt of the message.

The apparatus may comprise means for providing a request to a source radio access network to delete context information.

In a fourth aspect there is provided an apparatus comprising at least one processor and at least one memory including a computer program code, the at least one memory and the computer program code configured to, with the at least one processor, cause the apparatus at least to receive a configuration request from a user equipment, the configuration request comprising a connectionless service identifier, provide an updated location validity timer value associated with the connectionless service identifier to the user equipment and to a core network function to update an initial location validity timer value for storage as context information.

The apparatus may be configured to determine if the connectionless service identifier is valid.

An initial location validity timer value may be negotiated by the user equipment and a core network function based on the user equipment's subscription information.

The configuration request may comprise the initial location validity timer value.

The apparatus may be configured to receive an initial data transmission from the user equipment, said data comprising the connectionless service identifier, determine if the apparatus has a logical connection with a user plane function associated with the connectionless service identifier and, if so, provide an indication to the user plane function to start the stored location validity timer.

The apparatus may be configured to receive an initial data transmission from the user equipment, said data comprising the connectionless service identifier, determine if the apparatus has a logical connection with a user plane function associated with the connectionless service identifier and at least one of allocate an updated shorter identifier, to be used in the radio interface instead of connectionless service identifier for subsequent uplink connectionless data transmission and an updated UE location freshness timer to the user equipment and provide an indication to a control plane function to request a context information update associated with the connectionless service if not.

The apparatus may be configured to receive updated context information from the control plane function.

The apparatus may be configured to provide the updated context information to the user equipment.

The updated context information may comprise an updated connectionless service identifier.

The updated context information may comprise an updated location validity timer value.

The apparatus may be configured to provide a message to the control plane function that context information has been updated.

The updated context information may be provided to the user plane function by the control plane function on receipt of the message.

In a fifth aspect there is provided an apparatus comprising at least one processor and at least one memory including a computer program code, the at least one memory and the computer program code configured to, with the at least one processor, cause the apparatus at least to: receive an initial location validity timer value for a connectionless service from a core network function, provide a configuration request to a first radio access network, the configuration request comprising a connectionless service identifier and receive an updated location validity timer value associated with the connectionless service identifier from the first radio access network for storage as context information.

The connectionless service identifier may be used to determine the validity of the connectionless service identifier.

The initial location validity timer value may be negotiated with the core network function in dependence on the apparatus's subscription information.

The apparatus may be configured to receive a shorter identifier from the radio access network, to be used in a radio interface instead of connectionless service identifier for subsequent uplink connectionless data transmission.

The configuration request may comprise the initial location validity timer value.

The apparatus may be configured to provide a dummy data transmission to a radio access network node, wherein the radio access node is not associated with a radio access network previously associated with the user equipment.

The apparatus may be configured to provide an initial data transmission to a radio access network node, the data comprising a connectionless service identifier, determine if the radio access network node is associated with the first radio access network and, if so, initiate the location validity timer.

The apparatus may be configured to receive updated context information from a radio access node.

The updated context information may comprise an updated connectionless service identifier.

The updated context information may comprise an updated location validity timer value.

In a sixth aspect there is provided an apparatus comprising at least one processor and at least one memory including a computer program code, the at least one memory and the computer program code configured to, with the at least one processor, cause the apparatus at least to provide an initial location validity timer value to a user equipment for a connectionless service and receive an updated location validity timer value associated with the connectionless service identifier from the radio access network for storage as context information.

The apparatus may be configured to receive a request from a radio access network to determine if a connectionless service identifier is valid.

The apparatus may be configured to negotiate the initial location validity timer value with the user equipment in dependence on the user equipment's subscription information.

The apparatus may be configured to receive an indication from a radio access network node to request a context information update associated with the connectionless service, update the context information and provide the updated context information to the radio access network node.

The updated context information may comprise an updated connectionless service identifier.

The updated context information may comprise an updated location validity timer value.

The apparatus may be configured to receive a message that context information has been updated.

The apparatus may be configured to provide updated context information to a user plane function on receipt of the message.

The apparatus may be configured to provide a request to a source radio access network to delete context information.

In a seventh aspect there is provided a method comprising receiving a configuration request from a user equipment, the configuration request comprising a connectionless service identifier and providing an updated location validity timer value associated with the connectionless service identifier to the user equipment and to a core network function to update an initial location validity timer value for storage as context information.

The method may comprise determining if the connectionless service identifier is valid.

An initial location validity timer value may be negotiated by the user equipment and a core network function based on the user equipment's subscription information.

The configuration request may comprise the initial location validity timer value.

The method may comprise receiving an initial data transmission from the user equipment, said data comprising the connectionless service identifier, determining if the apparatus has a logical connection with a user plane function associated with the connectionless service identifier and, if so, providing an indication to the user plane function to start the stored location validity timer.

The method may comprise receiving an initial data transmission from the user equipment, said data comprising the connectionless service identifier, determining if the apparatus has a logical connection with a user plane function associated with the connectionless service identifier and at least one of allocating an updated shorter identifier, to be used in the radio interface instead of connectionless service identifier for subsequent uplink connectionless data transmission and an updated UE location freshness timer to the user equipment and providing an indication to a control plane function to request a context information update associated with the connectionless service if not.

The method may comprise receiving updated context information from the control plane function.

The method may comprise providing the updated context information to the user equipment.

The updated context information may comprise an updated connectionless service identifier.

The updated context information may comprise an updated location validity timer value.

The method may comprise providing a message to the control plane function that context information has been updated.

The updated context information may be provided to the user plane function by the control plane function on receipt of the message.

In an eighth aspect there is provided a method comprising receiving an initial location validity timer value for a connectionless service from a core network function, providing a configuration request to a first radio access network, the configuration request comprising a connectionless service identifier and receiving an updated location validity timer value associated with the connectionless service identifier from the first radio access network for storage as context information.

The connectionless service identifier may be used to determine the validity of the connectionless service identifier.

The initial location validity timer value may be negotiated with the core network function in dependence on the apparatus's subscription information.

The method may comprise receiving a shorter identifier from the radio access network, to be used in a radio interface instead of connectionless service identifier for subsequent uplink connectionless data transmission.

The configuration request may comprise the initial location validity timer value.

The method may comprise providing a dummy data transmission to a radio access network node, wherein the radio access node is not associated with a radio access network previously associated with the user equipment.

The method may comprise providing an initial data transmission to a radio access network node, the data comprising a connectionless service identifier, determining if the radio access network node is associated with the first radio access network and, if so, initiating the location validity timer.

The method may comprise receiving updated context information from a radio access node.

The updated context information may comprise an updated connectionless service identifier.

The updated context information may comprise an updated location validity timer value.

In a ninth aspect there is provided a method comprising providing an initial location validity timer value to a user equipment for a connectionless service and receiving an updated location validity timer value associated with the connectionless service identifier from the radio access network for storage as context information.

The method may comprise receiving a request from a radio access network to determine if a connectionless service identifier is valid.

The method may comprise negotiating the initial location validity timer value with the user equipment in dependence on the user equipment's subscription information.

The method may comprise receiving an indication from a radio access network node to request a context information update associated with the connectionless service, updating the context information and providing the updated context information to the radio access network node.

The updated context information may comprise an updated connectionless service identifier.

The updated context information may comprise an updated location validity timer value.

The method may comprise receiving a message that context information has been updated.

The method may comprise providing updated context information to a user plane function on receipt of the message.

The method may comprise providing a request to a source radio access network to delete context information.

In a tenth aspect there is provided a computer-readable medium comprising instructions for causing an apparatus to perform at least the following process: receiving a configuration request from a user equipment, the configuration request comprising a connectionless service identifier and providing an updated location validity timer value associated with the connectionless service identifier to the user equipment and to a core network function to update an initial location validity timer value for storage as context information.

The process may comprise determining if the connectionless service identifier is valid.

An initial location validity timer value may be negotiated by the user equipment and a core network function based on the user equipment's subscription information.

The configuration request may comprise the initial location validity timer value.

The process may comprise receiving an initial data transmission from the user equipment, said data comprising the connectionless service identifier, determining if the apparatus has a logical connection with a user plane function associated with the connectionless service identifier and, if so, providing an indication to the user plane function to start the stored location validity timer.

The process may comprise receiving an initial data transmission from the user equipment, said data comprising the connectionless service identifier, determining if the apparatus has a logical connection with a user plane function associated with the connectionless service identifier and at least one of allocating an updated shorter identifier, to be used in the radio interface instead of connectionless service identifier for subsequent uplink connectionless data transmission and an updated UE location freshness timer to the user equipment and providing an indication to a control plane function to request a context information update associated with the connectionless service if not.

The process may comprise receiving updated context information from the control plane function.

The process may comprise providing the updated context information to the user equipment.

The updated context information may comprise an updated connectionless service identifier.

The updated context information may comprise an updated location validity timer value.

The process may comprise providing a message to the control plane function that context information has been updated.

The updated context information may be provided to the user plane function by the control plane function on receipt of the message.

In an eleventh aspect there is provided a computer-readable medium comprising instructions for causing an apparatus to perform at least the following process receiving an initial location validity timer value for a connectionless service from a core network function, providing a configuration request to a first radio access network, the configuration request comprising a connectionless service identifier and receiving an updated location validity timer value associated with the connectionless service identifier from the first radio access network for storage as context information.

The connectionless service identifier may be used to determine the validity of the connectionless service identifier.

The initial location validity timer value may be negotiated with the core network function in dependence on the apparatus's subscription information.

The process may comprise receiving a shorter identifier from the radio access network, to be used in a radio interface instead of connectionless service identifier for subsequent uplink connectionless data transmission.

The configuration request may comprise the initial location validity timer value.

The process may comprise providing a dummy data transmission to a radio access network node, wherein the radio access node is not associated with a radio access network previously associated with the user equipment.

The process may comprise providing an initial data transmission to a radio access network node, the data comprising a connectionless service identifier, determining if the radio access network node is associated with the first radio access network and, if so, initiating the location validity timer.

The process may comprise receiving updated context information from a radio access node.

The updated context information may comprise an updated connectionless service identifier.

The updated context information may comprise an updated location validity timer value.

In a twelfth aspect there is provided a computer-readable medium comprising instructions for causing an apparatus to perform at least the following process: providing an initial location validity timer value to a user equipment for a connectionless service and receiving an updated location validity timer value associated with the connectionless service identifier from the radio access network for storage as context information.

The process may comprise receiving a request from a radio access network to determine if a connectionless service identifier is valid.

The process may comprise negotiating the initial location validity timer value with the user equipment in dependence on the user equipment's subscription information.

The process may comprise receiving an indication from a radio access network node to request a context information update associated with the connectionless service, updating the context information and providing the updated context information to the radio access network node.

The updated context information may comprise an updated connectionless service identifier.

The updated context information may comprise an updated location validity timer value.

The process may comprise receiving a message that context information has been updated.

The process may comprise providing updated context information to a user plane function on receipt of the message.

The process may comprise providing a request to a source radio access network to delete context information.

In a thirteenth aspect there is provided a non-transitory computer-readable medium comprising instructions for causing an apparatus to perform a process comprising the steps of the method of the seventh, eighth or ninth aspect.

In a fourteenth aspect there is provided a computer program comprising instructions for causing an apparatus to perform a process comprising the steps of the method of the seventh, eighth or ninth aspect.

In the above, many different embodiments have been described. It should be appreciated that further embodiments may be provided by the combination of any two or more of the embodiments described above.

### Description of Figures

Embodiments will now be described, by way of example only, with reference to the accompanying Figures in which:
Figure 1 shows a schematic diagram of an example communication system comprising a base station and a plurality of communication devices;
Figure 2 shows a schematic diagram of an example mobile communication device;
Figure 3 shows a schematic diagram of an example control apparatus;
Figure 4 shows a signalling flow of a UE initiated setup of a PDU session with connectionless mode transfer on the RAN-Core interface;
Figure 5 shows a signalling flow for a UE location freshness timer;
Figure 6 shows a signalling flow for a UE connectionless UL data transfer;
Figure 7 shows a signalling flow for mobility use cases;
Figure 8 shows a schematic diagram of mobility use case;
Figure 9 shows a signalling flow for connectionless transmission in a 5G system;
Figure 10a shows a flowchart of a method according to an embodiment;
Figure 10b shows a flowchart of a method according to an embodiment;
Figure 10c shows a flowchart of a method according to an embodiment;
Figure 11 shows an example signalling flow according to an embodiment;
Figure 12 shows an example signalling flow according to an embodiment;
Figure 13 shows an example signalling flow according to an embodiment;
Figure 14 shows an example signalling flow according to an embodiment.

### Detailed description

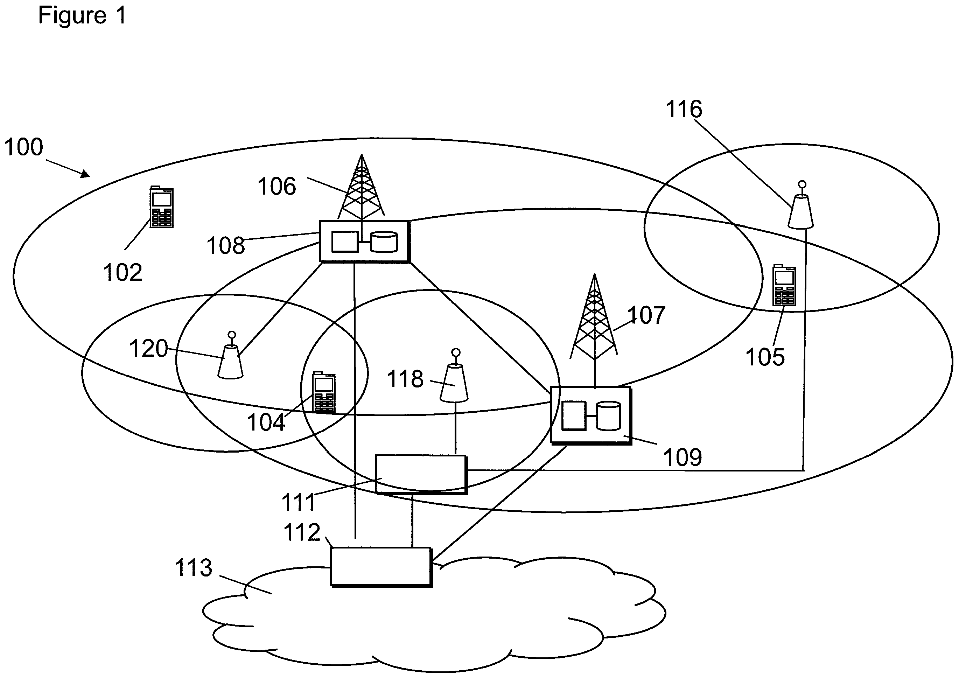

Before explaining in detail the examples, certain general principles of a wireless communication system and mobile communication devices are briefly explained with reference to Figures 1 to 3 to assist in understanding the technology underlying the described examples.

In a wireless communication system 100, such as that shown in figure 1, mobile communication devices or user equipment (UE) 102, 104, 105 are provided wireless access via at least one base station or similar wireless transmitting and/or receiving node or point. Base stations are typically controlled by at least one appropriate controller apparatus, so as to enable operation thereof and management of mobile communication devices in communication with the base stations. The controller apparatus may be located in a radio access network (e.g. wireless communication system 100) or in a core network (CN) (not shown) and may be implemented as one central apparatus or its functionality may be distributed over several apparatuses. The controller apparatus may be part of the base station and/or provided by a separate entity such as a Radio Network Controller. In Figure 1 control apparatus 108 and 109 are shown to control the respective macro level base stations 106 and 107. The control apparatus of a base station can be interconnected with other control entities. The control apparatus is typically provided with memory capacity and at least one data processor. The control apparatus and functions may be distributed between a plurality of control units. In some systems, the control apparatus may additionally or alternatively be provided in a radio network controller.

In Figure 1 base stations 106 and 107 are shown as connected to a wider communications network 113 via gateway 112. A further gateway function may be provided to connect to another network.

The smaller base stations 116, 118 and 120 may also be connected to the network 113, for example by a separate gateway function and/or via the controllers of the macro level stations. The base stations 116, 118 and 120 may be pico or femto level base stations or the like. In the example, stations 116 and 118 are connected via a gateway 111 whilst station 120 connects via the controller apparatus 108. In some embodiments, the smaller stations may not be provided. Smaller base stations 116, 118 and 120 may be part of a second network, for example WLAN and may be WLAN APs.

The communication devices 102, 104, 105 may access the communication system based on various access techniques, such as code division multiple access (CDMA), or wideband CDMA (WCDMA). Other non-limiting examples comprise time division multiple access (TDMA), frequency division multiple access (FDMA) and various schemes thereof such as the interleaved frequency division multiple access (IFDMA), single carrier frequency division multiple access (SC-FDMA) and orthogonal frequency division multiple access (OFDMA), space division multiple access (SDMA) and so on.

An example of wireless communication systems are architectures standardized by the 3rd Generation Partnership Project (3GPP). A latest 3GPP based development is often referred to as the long term evolution (LTE) of the Universal Mobile Telecommunications System (UMTS) radio-access technology. The various development stages of the 3GPP specifications are referred to as releases. More recent developments of the LTE are often referred to as LTE Advanced (LTE-A). The LTE (LTE-A) employs a radio mobile architecture known as the Evolved Universal Terrestrial Radio Access Network (E-UTRAN) and a core network known as the Evolved Packet Core (EPC). Base stations of such systems are known as evolved or enhanced Node Bs (eNBs) and provide E-UTRAN features such as user plane Packet Data Convergence/Radio Link Control/Medium Access Control/Physical layer protocol (PDCP/RLC/MAC/PHY) and control plane Radio Resource Control (RRC) protocol terminations towards the communication devices. Other examples of radio access system comprise those provided by base stations of systems that are based on technologies such as wireless local area network (WLAN) and/or WiMax (Worldwide Interoperability for Microwave Access). A base station can provide coverage for an entire cell or similar radio service area. Core network elements include Mobility Management Entity (MME), Serving Gateway (S-GW) and Packet Gateway (P-GW).

An example of a suitable communications system is the 5G or NR concept. Network architecture in NR may be similar to that of LTE-advanced. Base stations of NR systems may be known as next generation Node Bs (gNBs). Changes to the network architecture may depend on the need to support various radio technologies and finer QoS support, and some on-demand requirements for e.g. QoS levels to support QoE of user point of view. Also network aware services and applications, and service and application aware networks may bring changes to the architecture. Those are related to Information Centric Network (ICN) and User-Centric Content Delivery Network (UC-CDN) approaches. NR may use multiple input - multiple output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilise network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of the LTE or even be non-existent.

An example 5G core network (CN) comprises functional entities. The CN is connected to a UE via the radio access network (RAN). An UPF (User Plane Function) whose role is called PSA (PDU Session Anchor) may be responsible for forwarding frames back and forth between the DN (data network) and the tunnels established over the 5G towards the UE(s) exchanging traffic with the DN.

The UPF is controlled by an SMF (Session Management Function) that receives policies from a PCF (Policy Control Function). The CN may also include an AMF (Access & Mobility Function).

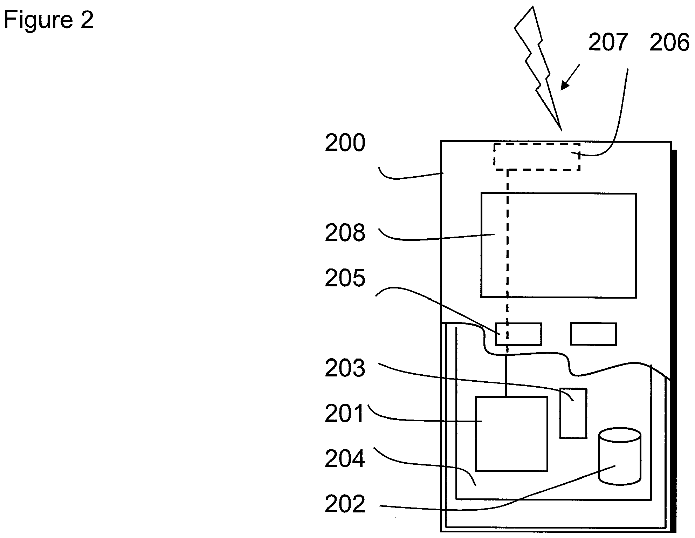

A possible mobile communication device will now be described in more detail with reference to Figure 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

A mobile device is typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204. The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

The mobile device 200 may receive signals over an air or radio interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the mobile device.

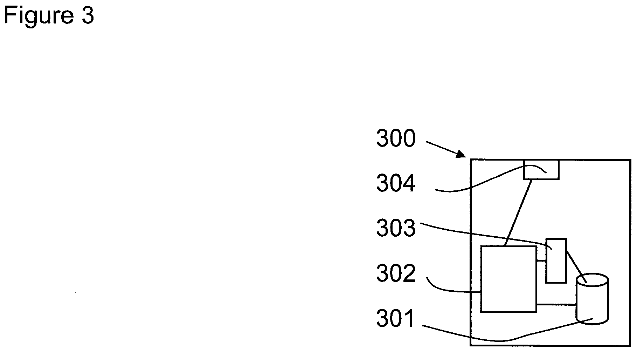

Figure 3 shows an example of a control apparatus for a communication system, for example to be coupled to and/or for controlling a station of an access system, such as a RAN node, e.g. a base station, eNB or gNB, a relay node or a core network node such as an MME or S-GW or P-GW, or a core network function such as AMF/SMF, or a server or host. The method may be implanted in a single control apparatus or across more than one control apparatus. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller. The control apparatus 300 can be arranged to provide control on communications in the service area of the system. The control apparatus 300 comprises at least one memory 301, at least one data processing unit 302, 303 and an input/output interface 304. Via the interface the control apparatus can be coupled to a receiver and a transmitter of the base station. The receiver and/or the transmitter may be implemented as a radio front end or a remote radio head.

Data transmission with a connectionless (CL) interface on the RAN-core interface has been discussed for massive internet of things (IoT) use cases for the Next Generation system. A CL interface may reduce signalling overhead when UEs send sporadic, and potentially small, amounts of data.

Enabling cellular loT (CloT)/machine type communications (MTC) functionalities, such as small data transmission, in 5G CN is anticipated. The CL interface may be an appropriate solution.

CL transfer mode may also be used to handle other use cases such as background tasks on smartphones and delay critical cases where control plane latency should be avoided.

In one connectionless scenario in the Next Generation system, a UCLSI (user plane gateway (UPGW) ConnectionLess Service Id) is used by a UE, RAN and UPGW to identify a PDU (Packet Data Unit) session with Connectionless mode data transfer on the RAN-Core interface. The CL context for each UE is created and maintained in the UE, RAN and core network side.

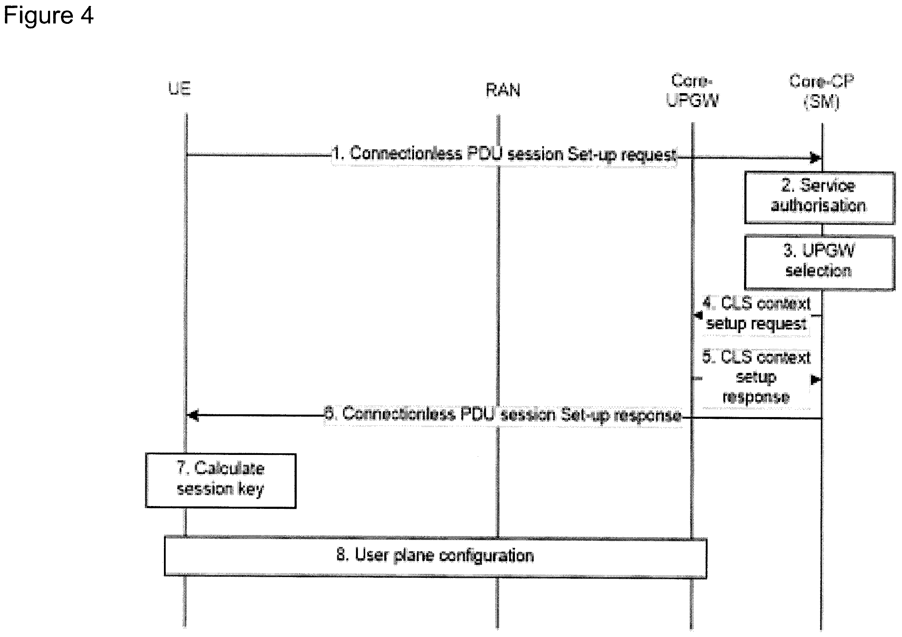

Figure 4 shows a UE initiated setup of a PDU session with CL mode transfer on the RAN-Core interface. The UE provides a CL PDU session set-up request to the core control plane (CP) session management (SM) function. The SM authorises the service and selects a UPGW. The SM sends a connectionless service (CL) context setup request to the UPGW and receives a CLS context setup response from the UPGW. The SM provides a connectionless PDU session set-up response to the UE, which calculates a session key and performs user plane configuration with the UPGW.

In this flow, it may not be clear when to establish the CL context in the RAN and UE side. The current CL Service context maintenance rules may result in unsynchronized status of the CL context between the network and the UE and/or cause wrong routing of the UUDL CL data transmission due to UE mobility. CL context maintenance rules in the RAN should be further considered.

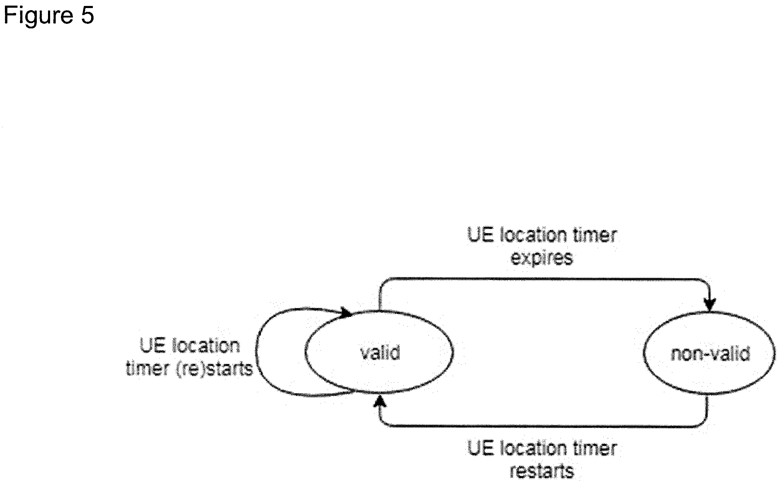

One of the elements in the CL context is the UE location freshness timer. The UE location freshness timer controls the validity of the UE location to a certain RAN. Figure 5 shows a flowchart of indicating the operation of the UE location freshness timer. When the UE location freshness timer expires, the UE location to the RAN is non-valid. When it starts (or restarts) until it expires, the UE location to the RAN is valid.

It may not be clear in the PDN session setup procedure shown in Figure 4 how to configure/allocate and start the UE location freshness timer. Improper operations may result in unsynchronized status between the network and the UE, impact the validity of the UE location to a certain RAN and finally trigger wrong routing of the UUDL CL data transmission.

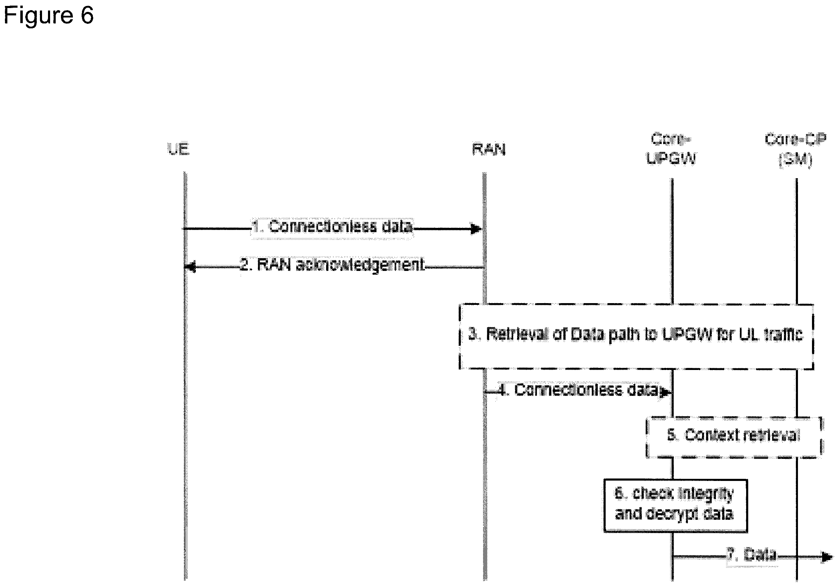

Figure 6 shows a UE CL UL data transfer. The UE provides CL data to the RAN and receives acknowledgement from the RAN. The RAN retrieves the data path to UPGW for UL traffic and provides the connectionless data to the UPGW. The UPGW retrieves the context from the SM, checks the integrity and decrypts the data and provides the data onwards.

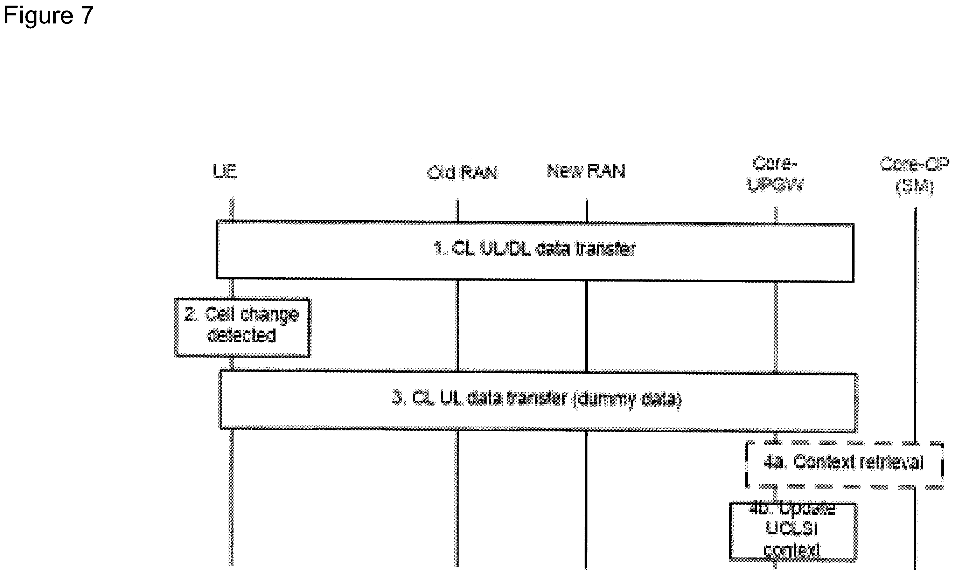

Figure 7 shows a mobility procedure. The mobility procedure defined in Figure 7 is triggered due to cell change. When a UE moves from an old RAN to a new RAN, the UPGW retrieves context from the CP in step 4 and updates the UCLSI context.

In both the CL uplink data transfer procedure defined in Figure 6 and the mobility procedure defined in Figure 7, UE mobility may cause routing problems of the UUDL CL data transmission.

In a 5G system, the UPF acts as the Core-UPGW does in the NextGeneration system and the AMF/SMF acts as the Core-CP (SM).

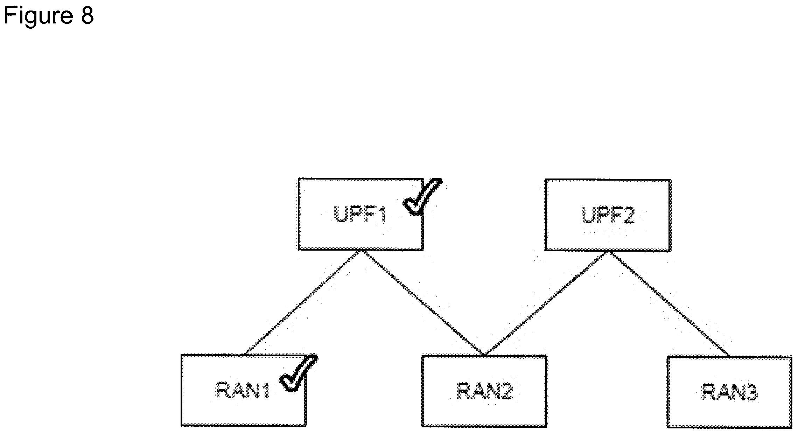

Figure 8 shows an example where RAN1 and RAN2 are associated with user plane function (UPF)1. RAN2 and RAN3 are associated with UPF2. The CL context is established in UPF1 and RAN1. Frequent mobility support in the cell level may result in increased signalling overhead.

The new RAN (after a mobility procedure) may not have a logical connection to the UPF indicated by the UCLSI (e.g. the UE moves from RAN2 to RAN3 as shown in Figure 8). DL packets sent to the old RAN after the UE has left the old RAN may be lost. Therefore, the UCLSI of the CL service needs to be reallocated and the CL context need to be updated in the core network, RAN and UE.

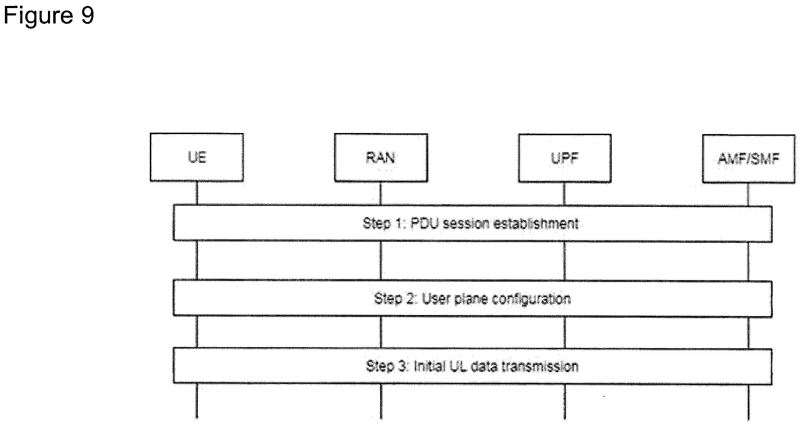

Figure 9 shows a signalling flow for connectionless transmission in a 5G system comprising a UE, RAN and UPF and AMF/SMF in the core network. Step 1 is the PDU session setup procedure corresponding to steps 1 to 6 of Figure 4. Step 2 is the user plane configuration corresponding to steps 7 and 8 of Figure 4. Step 3 is the initial data transmission corresponding to steps 1 to 7 in Figure 6.

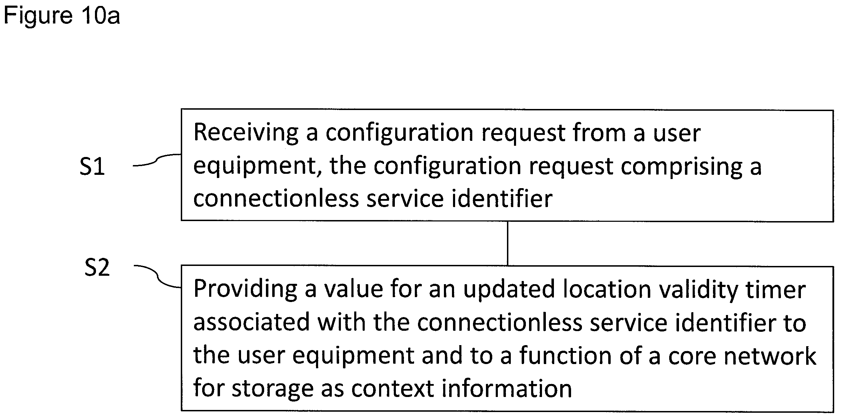

Figure 10a shows a flowchart of an example method according to an embodiment. In a first step, S1, the method comprises receiving a configuration request from a user equipment, the configuration request comprising a connectionless service identifier.

In a second step, S2, the method comprises providing a value for an updated location validity timer associated with the connectionless service identifier to the user equipment and to a function of a core network for storage as context information.

The method may comprise determining if the connectionless service identifier is valid.

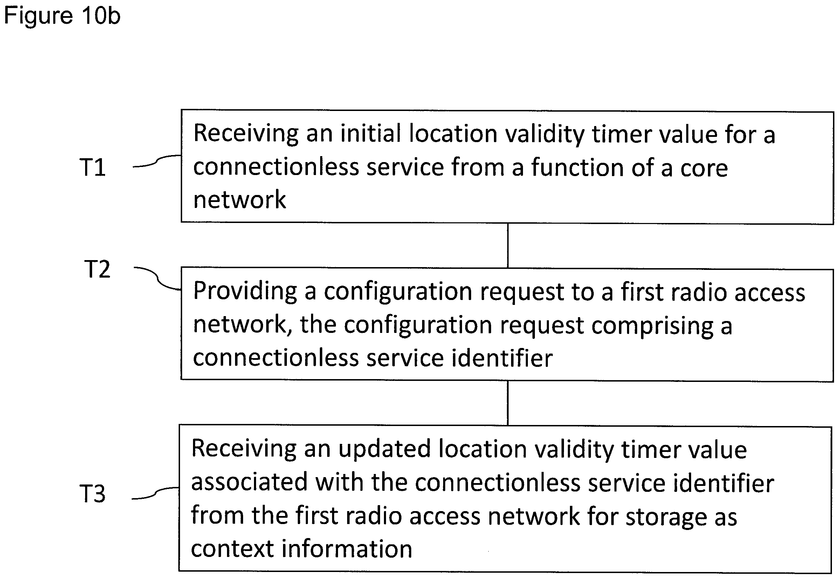

A method as described with reference to Figure 10a may be performed at a RAN
Figure 10b shows a flowchart of an example method according to an embodiment. In a first step, T1, the method comprises negotiated with a core network function on the initial location validity timer value, receiving an initial location validity timer value for a connectionless service from a core network function.

In a second step, T2, the method comprises providing a configuration request to a first radio access network, the configuration request comprising a connectionless service identifier. Optionally, the connectionless service identifier may be used in determining the validity of the connectionless service identifier.

In a third step, T3, the method comprises receiving an updated location validity timer value associated with the connectionless service identifier from the first radio access network for storage as context information.

A method as described with reference to Figure 10b may be performed at a UE.

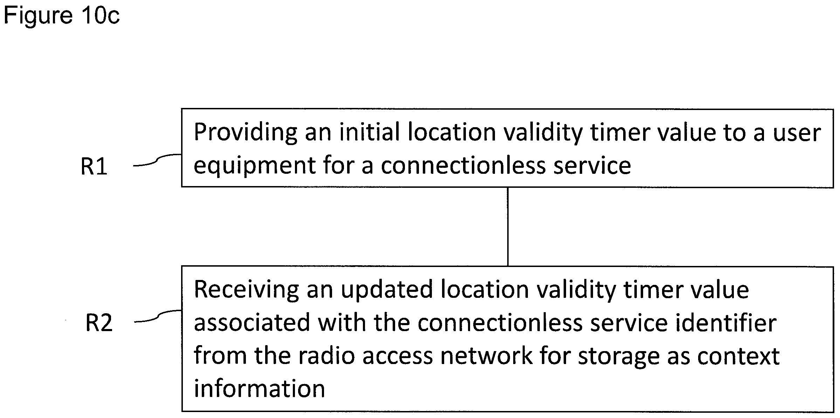

Figure 10c shows a flowchart of an example method according to an embodiment. In a first step R1, the method comprises negotiated with a user equipment on the initial location validity timer value, providing an initial location validity timer value to a user equipment for a connectionless service.

In a second step, R2, the method comprises receiving an updated location validity timer value associated with the connectionless service identifier from the radio access network for storage as context information.

Optionally, the method may comprise receiving a request from a radio access network to determine if a connectionless service identifier is valid.

A method as described with reference to Figure 10c may be performed at a core network function, for example AMF/SMF.

That is, in step 1 of the signalling flow of Figure 9, during the PDU session setup procedure, and before the user plane for the PDU session is setup, the initial value of the UE location freshness timer (initial location validity timer value) is exchanged between the UE and the core network. The initial location validity timer value may be determined based on UE's subscription information.

In step 2, during the user plane configuration procedure for the allocated UCLSI (connectionless service identifier), the RAN allocates a value of the UE location freshness timer (an updated location validity timer value) to the UE based on the UE's request and RAN configuration. The RAN indicates this allocated value to the UPF. The RAN may allocate the UE location freshness timer with a smaller value than the initial value. CL context is thus established in the RAN and the UE and updated in the UPF (with the UE location freshness timer provided from the RAN).

That is, in the user plane configuration, the RAN involves the AMF/SMF. The RAN may initiate a query to check the UCLSI validity from the AMF/SMF. In this step, the UE may also acquire the radio configuration from the RAN and obtain the allocated UE location freshness timer.

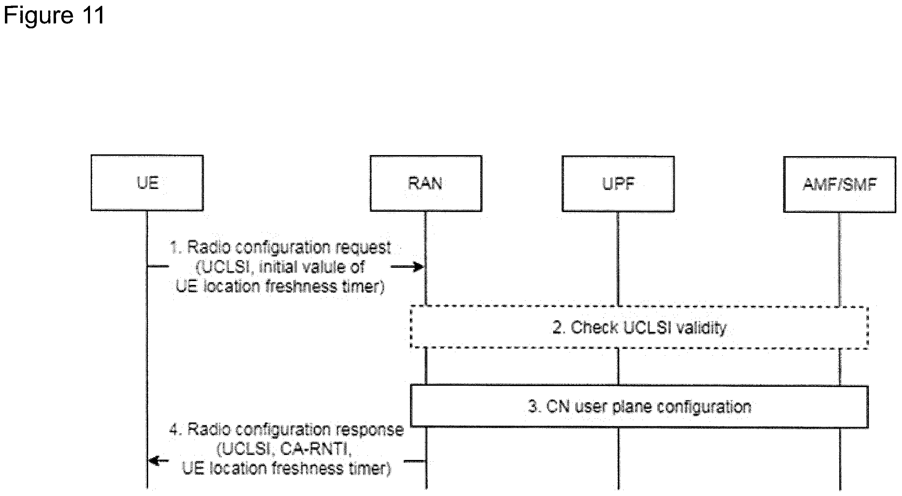

Figure 11 shows an example signalling flow for RAN configuration of the UE location freshness timer which may take place during user plane configuration (step 2 in Figure 9). When requesting the RAN configuration, the UE indicates the UCLSI and the initial value of the UE location freshness timer. Upon receiving the RAN configuration response, the UE will obtain the allocated UE location freshness timer with consideration of the RAN configuration. The UE may obtain a shorter identifier from the RAN, e.g. CA-RNTI (Contention Access Radio Network Temporary Identifier), which may be used in the radio interface instead of ULCSI for subsequent UL CL data transmission.

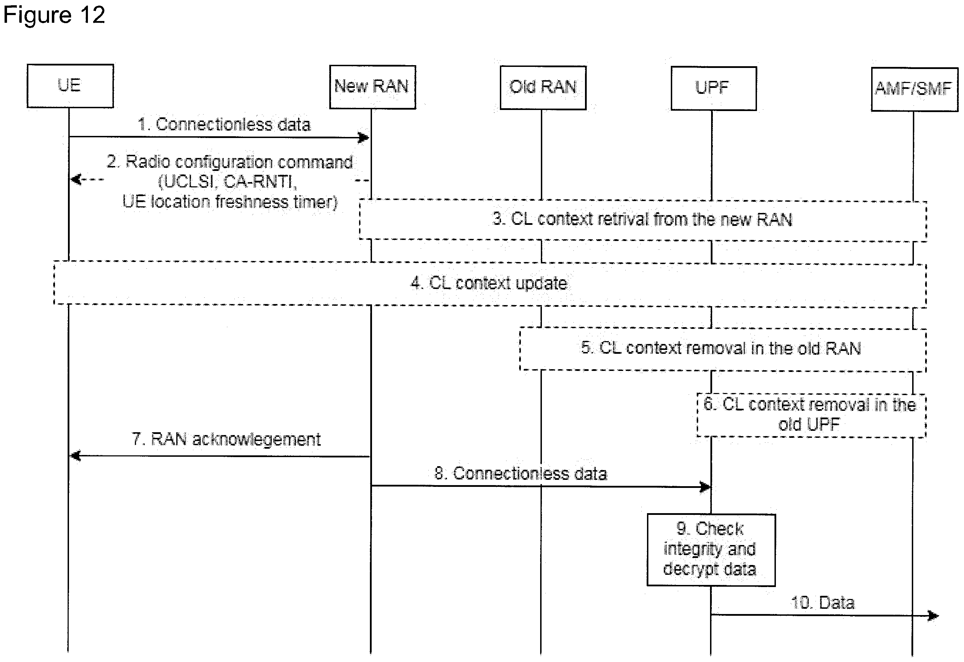

Figure 12 shows a UE connectionless uplink data transfer procedure. A UE provides data to a new RAN. The new RAN may allocate an updated shorter identifier e.g. CA-RNTI and/or UE location freshness timer to the UE. The new RAN retrieves context from the AMF/SMF. The RAN may retrieve the data path to the UPF from the AMF/SMF only after receiving UL connectionless data from the UE. Hence, the RAN can only acknowledge the UE after it finishes the retrieval step. If the RAN finds it does not have a logical connection with the UPF indicated by the received UCLSI from the UE, it initiates CL context retrieval step to the AMF/SMF with parameter of UCLSI and an indication to request the CL context update. The AMF/SMF initiates a CL context update procedure.

A method may comprise determining if the radio access network node is associated with the first radio access network and, if so, initiating the location validity timer. For example, in the initial UL data transmission procedure, the UE may start the allocated UE location freshness timer if the serving RAN is the same RAN to which the timer is allocated. RAN informs the UPF to start the timer upon receiving the UL CL data.

If, during a retrieval step by a RAN, the RAN finds that it does not have a logical connection to the UPF indicated by the received UCLSI, the RAN initiates a CL context update procedure. A CL context update procedure may comprise a core network function (e.g. UPF) receiving an indication from a radio access network node to request a context information update associated with the connectionless service, updating the context information and providing the updated context information to the radio access network node. The radio access network node may provide the updated context information to the UE.

As a result, both the UE connectionless uplink data transfer procedure and mobility support procedure may be improved to consider the possibility of CL context update procedure due to UE mobility.

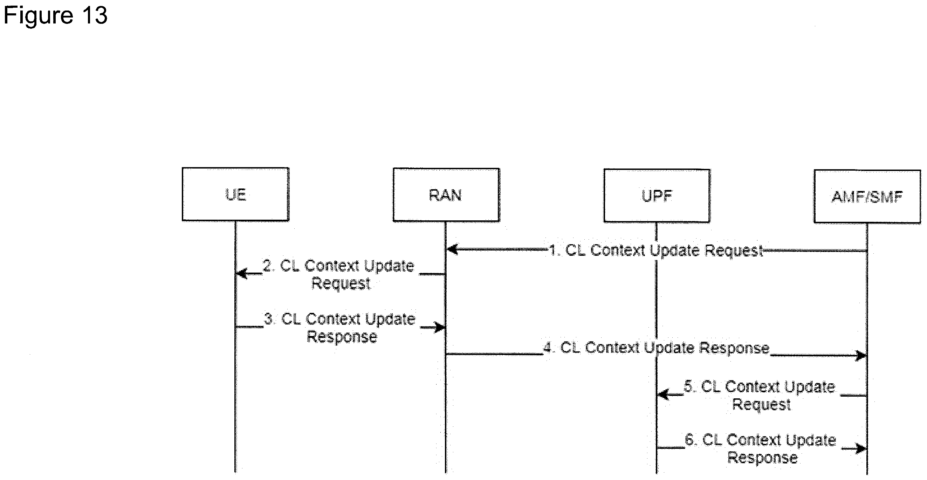

An example signalling flow for a CL context update procedure is shown in Figure 13. In the CL context update, a new UCLSI is allocated and sent to the UPF, RAN and UE. The updated context information may also comprise a second updated location validity timer. That is, a new UE location freshness timer may be allocated. After the UE, RAN and/or UPF update the CL context, they re-start the UE location freshness timer.

The AMF/SMF may request the old RAN to delete its CL context upon receiving the context retrieval from a new RAN. Alternatively, or in addition, the old RAN may delete the CL context when the UE location freshness timer expires. The AMF/SMF may request the old UPF to delete its CL context. Similarly, the old UPF may delete the CL context when the UE location freshness timer expires.

The RAN acknowledges the UE with the new UCLSI in step 6 and forwards the received connectionless data to UPF in step 7.

If the new RAN allocates a new UE location freshness timer in the CL context update, the RAN starts the new UE location freshness timer. Otherwise, the RAN restarts the old UE location freshness timer stored in the CL context.

Upon receiving the acknowledgement from the RAN, the UE restart the UE location freshness timer for the indicated UCLSI or start the new UE location freshness timer for the indicated new UCLSI.

Upon receiving the UL data from the RAN, the UPF restarts the UE location freshness timer for the indicated UCLSI or start the new UE location freshness timer for the indicated new UCLSI.

In step 1 of the flow shown in Figure 13, the AMF/SMF sends the CL Context Update Request to the new RAN, with parameters {old UCLSI, new UCLSI and UE location freshness timer}.

Upon receiving the CL context update request from the core network, the RAN sends the CL Context Update Request to the UE, with parameters {old UCLSI, new UCLSI and UE location freshness timer}.

Upon receiving the CL context update request from the RAN, the UE updates the CL context and starts the UE location freshness timer for the indicated new UCLSI. The UE sends CL Context Update Response to report the successful CL context updating.

Upon receiving the CL context update response from the UE, the RAN updates the CL context and starts the UE location freshness timer for the indicated new UCLSI. The RAN sends CL Context Update Response to the AMF/SMF to report the successful CL context updating.

Upon receiving the CL context update response from the RAN, the AMF/SMF sends the CL Context Update Request to the UPF, with parameters {UE ID, new UCLSI and UE location freshness timer}.

Upon receiving the context update request from the AMF/SMF, the UPF updates the CL context and the UPF starts UE location freshness timer for the indicated UCLSI. The UPF sends CL Context Update Response to the AMF/SMF to report the successful CL context updating.

If either UE or RAN reports any failure for the CL context update procedure, the procedure is terminated.

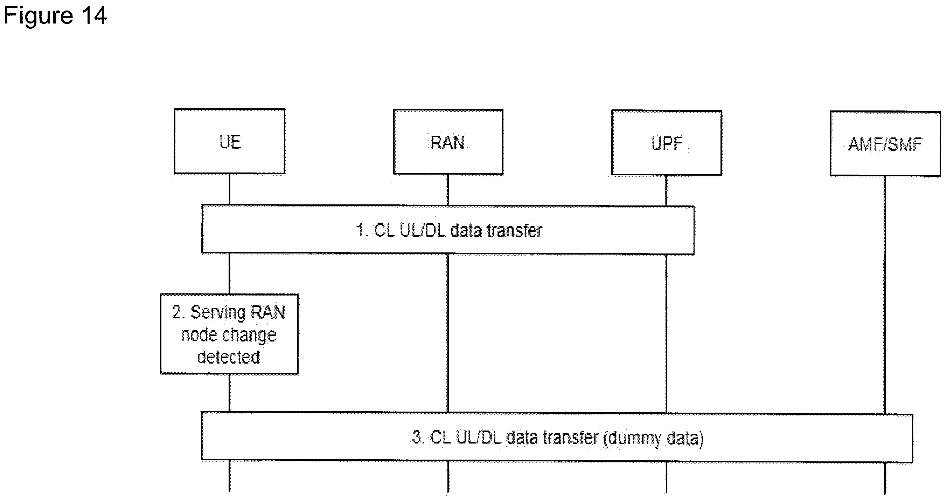

Figure 14 shows a mobility support procedure. A mobility support procedure may comprise the UE providing a dummy data transmission to a radio access network node, wherein the radio access node is not associated with a radio access network previously associated with the user equipment (e.g. an old RAN or source RAN).The UE only initiates the mobility support procedure when it detects that its serving RAN node has changed.

The apparatus and methods as described above may improve the CL context maintenance mechanisms in both UE side and network side and provides signalling steps to guarantee that CL data transmission works well in all mobility cases.

The method may be implemented in a user equipment as described with reference to Figure 2 or a control apparatus as described with reference to figure 3. An apparatus may comprise means for receiving a configuration request from a user equipment, the configuration request comprising a connectionless service identifier and providing an updated location validity timer value associated with the connectionless service identifier to the user equipment and to a core network function to update an initial location validity timer value for storage as context information.

Alternatively or in addition, an apparatus may comprise means for receiving an initial location validity timer value for a connectionless service from a core network function, providing a configuration request to a first radio access network, the configuration request comprising a connectionless service identifier and receiving an updated location validity timer value associated with the connectionless service identifier from the first radio access network for storage as context information.

Alternatively or in addition, an apparatus may comprise means for providing an initial location validity timer value to a user equipment for a connectionless service and receiving an updated location validity timer value associated with the connectionless service identifier from the radio access network for storage as context information.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst embodiments have been described in relation to 5G loT, similar principles can be applied in relation to other networks and communication systems where connectionless data transmission is used, Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Computer software or program, also called program product, including software routines, applets and/or macros, may be stored in any apparatusreadable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims. Indeed, there is a further embodiment comprising a combination of one or more embodiments with any of the other embodiments previously discussed.

## Claims

1. A radio access network apparatus, said apparatus comprising means (301, 302, 303, 304) for:
receiving (S1) a configuration request from a user equipment, the configuration request comprising a connectionless service identifier, whereby the connectionless service identifier is used to identify a packet data session with a connectionless mode data transfer on the interface between the radio access network apparatus and a core network function; and
providing (S2) to the user equipment and to the core network function an updated location validity timer value based on the request and radio access network configuration and associated with the connectionless service identifier to update an initial location validity timer value for storage as context information for the user equipment.

2. A radio access network apparatus according to claim 1 comprising means for determining if the connectionless service identifier is valid.

3. A radio access network apparatus according to any one of claims 1 to 2, wherein an initial location validity timer value is negotiated by the user equipment and a core network function based on the user equipment's subscription information.

4. A radio access network apparatus according to any of claims 1 to 3 comprising means for:
receiving an initial data transmission from the user equipment, said data comprising the connectionless service identifier;
determining if the apparatus has a logical connection with a user plane function associated with the connectionless service identifier; and, if so,
providing an indication to the user plane function to start the stored location validity timer.

5. A radio access network apparatus according to any one of claims 1 to 3 comprising means for:
receiving an initial data transmission from the user equipment, said data comprising the connectionless service identifier;
determining if the apparatus has a logical connection with a user plane function associated with the connectionless service identifier; and
at least one of allocating an updated shorter identifier, to be used in the radio interface instead of connectionless service identifier for subsequent uplink connectionless data transmission and an updated UE location freshness timer to the user equipment and providing an indication to a control plane function to request a context information update associated with the connectionless service if not.

6. A user equipment apparatus, said apparatus comprising means (201, 202, 206) for:
receiving (T1) an initial location validity timer value for a connectionless service from a core network function;
providing (T2) a configuration request to a first radio access network, the configuration request comprising a connectionless service identifier, whereby the connectionless service identifier is used to identify a packet data session with a connectionless mode data transfer on the interface between the radio access network apparatus and the core network function; and
receiving (T3) an updated location validity timer value based on the request and radio access network configuration and associated with the connectionless service identifier from the first radio access network for storage as context information for the user equipment.

7. A user equipment apparatus according to claim 6, wherein the initial location validity timer value is negotiated with the core network function in dependence on the apparatus's subscription information.

8. A user equipment apparatus according to claim 6 or claim 7, comprising means for: receiving a shorter identifier from the radio access network, to be used in a radio interface instead of connectionless service identifier for subsequent uplink connectionless data transmission.

9. A core network function apparatus comprising means for:
providing an initial location validity timer value to a user equipment for a connectionless service; and
receiving an updated location validity timer value based on an user equipment request and radio access network configuration and associated with the connectionless service identifier from the radio access network for storage as context information for the user equipment, whereby the connectionless service identifier is used to identify a packet data session with a connectionless mode data transfer on the interface between the radio access network apparatus and the core network function.

10. A method performed by a radio access network apparatus, comprising:
receiving (S1) a configuration request from a user equipment, the configuration request comprising a connectionless service identifier, whereby the connectionless service identifier is used to identify a packet data session with a connectionless mode data transfer on the interface between the radio access network apparatus and a core network function; and
providing (S2) an updated location validity timer value based on the request and radio access network configuration and associated with the connectionless service identifier to the user equipment and to the core network function to update an initial location validity timer value for storage as context information for the user equipment.

11. A method performed by a user equipment apparatus comprising:
receiving (T1) an initial location validity timer value for a connectionless service from a core network function;
providing (T2) a configuration request to a first radio access network, the configuration request comprising a connectionless service identifier, whereby the connectionless service identifier is used to identify a packet data session with a connectionless mode data transfer on the interface between the radio access network apparatus and the core network function; and
receiving (T3) an updated location validity timer value based on the request and radio access network configuration and associated with the connectionless service identifier from the first radio access network for storage as context information for the user equipment.

12. A method performed by a core network function apparatus comprising:
providing an initial location validity timer value to a user equipment for a connectionless service; and
receiving an updated location validity timer value based on a user equipment request and radio access network configuration and associated with the connectionless service identifier from the radio access network for storage as context information for the user equipment, whereby the connectionless service identifier is used to identify a packet data session with a connectionless mode data transfer on the interface between the radio access network apparatus and the core network function.

13. A computer-readable medium comprising instructions for causing a radio access network apparatus to perform at least the following:
receiving (S1) a configuration request from a user equipment, the configuration request comprising a connectionless service identifier, whereby the connectionless service identifier is used to identify a packet data session with a connectionless mode data transfer on the interface between the radio access network apparatus and a core network function; and
providing (S2) an updated location validity timer value based on the request and
radio access network configuration and associated with the connectionless service identifier to the user equipment and to the a core network function to update an initial location validity timer value for storage as context information for the user equipment.

14. A computer-readable medium comprising instructions for causing a user equipment
apparatus to perform at least the following:
receiving (T1) an initial location validity timer value for a connectionless service from a core network function;
providing (T2) a configuration request to a first radio access network, the configuration request comprising a connectionless service identifier, whereby the connectionless service identifier is used to identify a packet data session with a connectionless mode data transfer on the interface between the radio access network apparatus and the core network function; and
receiving (T3) an updated location validity timer value based on the request and radio access network configuration and associated with the connectionless service identifier from the first radio access network for storage as context information for the user equipment.

15. A computer-readable medium comprising instructions for causing a core network function apparatus to perform at least the following:
providing an initial location validity timer value to a user equipment for a connectionless service; and
receiving an updated location validity timer value based on a user equipment request and radio access network configuration and associated with the connectionless service identifier from the radio access network for storage as context information for the user equipment, whereby the connectionless service identifier is used to identify a packet data session with a connectionless mode data transfer on the interface between the radio access network apparatus and the core network function.

## Patentansprüche

1. Funkzugangsnetzwerkvorrichtung, wobei die Vorrichtung Mittel (301, 302, 303, 304) zum Durchführen von Folgendem umfasst:
Empfangen (S1) einer Auslegungsanforderung von einer Teilnehmereinrichtung, wobei die Auslegungsanforderung eine Kennung für einen verbindungslosen Dienst umfasst, wodurch die Kennung für einen verbindungslosen Dienst verwendet wird, um eine Paketdatensitzung für eine Datenübermittlung mit einem verbindungslosen Modus an der Schnittstelle zwischen der Funkzugangsnetzwerkvorrichtung und einer Kernnetzwerkfunktion zu identifizieren; und
Bereitstellen (S2) eines aktualisierten Standortgültigkeitstimerwertes für die Teilnehmereinrichtung und die Kernnetzwerkfunktion, der mit der Kennung für einen verbindungslosen Dienst verknüpft ist, auf Basis der Anforderung und der Funkzugangsnetzwerkauslegung, um einen anfänglichen Standortgültigkeitstimerwert zum Speichern als Kontextinformationen für die Teilnehmereinrichtung zu aktualisieren.

2. Funkzugangsnetzwerkvorrichtung nach Anspruch 1, die Mittel zum Bestimmen, ob die Kennung für einen verbindungslosen Dienst gültig ist, umfasst.

3. Funkzugangsnetzwerkvorrichtung nach einem der Ansprüche 1 bis 2, wobei ein anfänglicher Standortgültigkeitstimerwert durch die Teilnehmereinrichtung und eine Kernnetzwerkfunktion auf Basis von Subskriptionsinformationen der Teilnehmereinrichtung ausgehandelt wird.

4. Funkzugangsnetzwerkvorrichtung nach einem der Ansprüche 1 bis 3, die Mittel für Folgendes umfasst:
Empfangen einer anfänglichen Datenübertragung von der Teilnehmereinrichtung, wobei die Daten die Kennung für einen verbindungslosen Dienst umfassen;
Bestimmen, ob die Vorrichtung eine logische Verbindung mit einer Benutzerebenenfunktion aufweist, die mit der Kennung für einen verbindungslosen Dienst verknüpft ist; und, wenn ja,
Bereitstellen einer Anzeige zum Starten des Timers für eine gespeicherte Standortgültigkeit für die Benutzerebenenfunktion.

5. Funkzugangsnetzwerkvorrichtung nach einem der Ansprüche 1 bis 3, die Mittel für Folgendes umfasst:
Empfangen einer anfänglichen Datenübertragung von der Teilnehmereinrichtung, wobei die Daten die Kennung für einen verbindungslosen Dienst umfassen;
Bestimmen, ob die Vorrichtung eine logische Verbindung mit einer Benutzerebenenfunktion aufweist, die mit der Kennung für einen verbindungslosen Dienst verknüpft ist; und
mindestens eines vom Zuteilen einer aktualisierten kürzeren Kennung, die in der Funkschnittstelle anstelle der Kennung für einen verbindungslosen Dienst für eine nachfolgende verbindungslose Uplinkdatenübertragung zu verwenden ist, und eines Timers für eine aktualisierte UE-Standortaktualität zur Teilnehmereinrichtung und, wenn nicht, Bereitstellen einer Anzeige zur Anforderung einer Kontextinformationsaktualisierung, die mit dem verbindungslosen Dienst verknüpft ist, für eine Steuerebenenfunktion.

6. Teilnehmereinrichtungsvorrichtung, wobei die Vorrichtung Mittel (201, 202, 206) für Folgendes umfasst:
Empfangen (T1) eines anfänglichen Standortgültigkeitstimerwertes für einen verbindungslosen Dienst von einer Kernnetzwerkfunktion;
Bereitstellen (T2) einer Auslegungsanforderung für ein erstes Funkzugangsnetzwerk, wobei die Auslegungsanforderung eine Kennung für einen verbindungslosen Dienst umfasst, wodurch die Kennung für einen verbindungslosen Dienst verwendet wird, um eine Paketdatensitzung für eine Datenübermittlung mit einem verbindungslosen Modus an der Schnittstelle zwischen der Funkzugangsnetzwerkvorrichtung und der Kernnetzwerkfunktion zu identifizieren; und
Empfangen (T3) eines aktualisierten Standortgültigkeitstimerwertes, der mit der Kennung für einen verbindungslosen Dienst verknüpft ist, auf Basis der Anforderung und der Funkzugangsnetzwerkauslegung vom ersten Funkzugangsnetzwerk zum Speichern als Kontextinformationen für die Teilnehmereinrichtung.

7. Teilnehmereinrichtungsvorrichtung nach Anspruch 6, wobei der anfängliche Standortgültigkeitstimerwert mit der Kernnetzwerkfunktion in Abhängigkeit von Subskriptionsinformationen der Vorrichtung ausgehandelt wird.

8. Teilnehmereinrichtungsvorrichtung nach Anspruch 6 oder Anspruch 7, die Mittel für Folgendes umfasst: Empfangen einer kürzeren Kennung vom Funkzugangsnetzwerk, die in einer Funkschnittstelle anstelle der Kennung für einen verbindungslosen Dienst für eine nachfolgende verbindungslose Uplinkdatenübertragung zu verwenden ist.

9. Kernnetzwerkfunktionsvorrichtung, die Mittel für Folgendes umfasst:
Bereitstellen eines anfänglichen Standortgültigkeitstimerwertes für eine Teilnehmereinrichtung für einen verbindungslosen Dienst; und
Empfangen eines aktualisierten Standortgültigkeitstimerwertes, der mit der Kennung für einen verbindungslosen Dienst verknüpft ist, auf Basis einer Anforderung einer Teilnehmereinrichtung und der Funkzugangsnetzwerkauslegung vom Funkzugangsnetzwerk zum Speichern als Kontextinformationen für die Teilnehmereinrichtung, wodurch die Kennung für einen verbindungslosen Dienst verwendet wird, um eine Paketdatensitzung für eine Datenübermittlung mit einem verbindungslosen Modus an der Schnittstelle zwischen der Funkzugangsnetzwerkvorrichtung und der Kernnetzwerkfunktion zu identifizieren.

10. Verfahren, das von einer Funkzugangsnetzwerkvorrichtung durchgeführt wird und Folgendes umfasst:
Empfangen (S1) einer Auslegungsanforderung von einer Teilnehmereinrichtung, wobei die Auslegungsanforderung eine Kennung für einen verbindungslosen Dienst umfasst, wodurch die Kennung für einen verbindungslosen Dienst verwendet wird, um eine Paketdatensitzung für eine Datenübermittlung mit einem verbindungslosen Modus an der Schnittstelle zwischen der Funkzugangsnetzwerkvorrichtung und einer Kernnetzwerkfunktion zu identifizieren; und
Bereitstellen (S2) eines aktualisierten Standortgültigkeitstimerwertes für die Teilnehmereinrichtung und die Kernnetzwerkfunktion, der mit der Kennung für einen verbindungslosen Dienst verknüpft ist, auf Basis der Anforderung und der Funkzugangsnetzwerkauslegung, um einen anfänglichen Standortgültigkeitstimerwert zum Speichern als Kontextinformationen für die Teilnehmereinrichtung zu aktualisieren.

11. Verfahren, das von einer Teilnehmereinrichtungsvorrichtung durchgeführt wird und Folgendes umfasst:
Empfangen (T1) eines anfänglichen Standortgültigkeitstimerwertes für einen verbindungslosen Dienst von einer Kernnetzwerkfunktion;
Bereitstellen (T2) einer Auslegungsanforderung für ein erstes Funkzugangsnetzwerk, wobei die Auslegungsanforderung eine Kennung für einen verbindungslosen Dienst umfasst, wodurch die Kennung für einen verbindungslosen Dienst verwendet wird, um eine Paketdatensitzung für eine Datenübermittlung mit einem verbindungslosen Modus an der Schnittstelle zwischen der Funkzugangsnetzwerkvorrichtung und der Kernnetzwerkfunktion zu identifizieren; und
Empfangen (T3) eines aktualisierten Standortgültigkeitstimerwertes, der mit der Kennung für einen verbindungslosen Dienst verknüpft ist, auf Basis der Anforderung und der Funkzugangsnetzwerkauslegung vom ersten Funkzugangsnetzwerk zum Speichern als Kontextinformationen für die Teilnehmereinrichtung.

12. Verfahren, das von einer Kernnetzwerkfunktionsvorrichtung durchgeführt wird und Folgendes umfasst:
Bereitstellen eines anfänglichen Standortgültigkeitstimerwertes für eine Teilnehmereinrichtung für einen verbindungslosen Dienst; und
Empfangen eines aktualisierten Standortgültigkeitstimerwertes, der mit der Kennung für einen verbindungslosen Dienst verknüpft ist, auf Basis einer Anforderung einer Teilnehmereinrichtung und der Funkzugangsnetzwerkauslegung vom Funkzugangsnetzwerk zum Speichern als Kontextinformationen für die Teilnehmereinrichtung, wodurch die Kennung für einen verbindungslosen Dienst verwendet wird, um eine Paketdatensitzung für eine Datenübermittlung mit einem verbindungslosen Modus an der Schnittstelle zwischen der Funkzugangsnetzwerkvorrichtung und der Kernnetzwerkfunktion zu identifizieren.

13. Computerlesbares Medium, das Anweisungen zum Veranlassen einer Funkzugangsnetzwerkvorrichtung, mindestens Folgendes durchzuführen, umfasst:
Empfangen (S1) einer Auslegungsanforderung von einer Teilnehmereinrichtung, wobei die Auslegungsanforderung eine Kennung für einen verbindungslosen Dienst umfasst, wodurch die Kennung für einen verbindungslosen Dienst verwendet wird, um eine Paketdatensitzung für eine Datenübermittlung mit einem verbindungslosen Modus an der Schnittstelle zwischen der Funkzugangsnetzwerkvorrichtung und einer Kernnetzwerkfunktion zu identifizieren; und
Bereitstellen (S2) eines aktualisierten Standortgültigkeitstimerwertes für die Teilnehmereinrichtung und die Kernnetzwerkfunktion, der mit der Kennung für einen verbindungslosen Dienst verknüpft ist, auf Basis der Anforderung und der Funkzugangsnetzwerkauslegung, um einen anfänglichen Standortgültigkeitstimerwert zum Speichern als Kontextinformationen für die Teilnehmereinrichtung zu aktualisieren.

14. Computerlesbares Medium, das Anweisungen zum Veranlassen einer Teilnehmereinrichtungsvorrichtung, mindestens Folgendes durchzuführen, umfasst:
Empfangen (T1) eines anfänglichen Standortgültigkeitstimerwertes für einen verbindungslosen Dienst von einer Kernnetzwerkfunktion;
Bereitstellen (T2) einer Auslegungsanforderung für ein erstes Funkzugangsnetzwerk, wobei die Auslegungsanforderung eine Kennung für einen verbindungslosen Dienst umfasst, wodurch die Kennung für einen verbindungslosen Dienst verwendet wird, um eine Paketdatensitzung für eine Datenübermittlung mit einem verbindungslosen Modus an der Schnittstelle zwischen der Funkzugangsnetzwerkvorrichtung und der Kernnetzwerkfunktion zu identifizieren; und
Empfangen (T3) eines aktualisierten Standortgültigkeitstimerwertes, der mit der Kennung für einen verbindungslosen Dienst verknüpft ist, auf Basis der Anforderung und der Funkzugangsnetzwerkauslegung vom ersten Funkzugangsnetzwerk zum Speichern als Kontextinformationen für die Teilnehmereinrichtung.

15. Computerlesbares Medium, das Anweisungen zum Veranlassen einer Kernnetzwerkfunktionsvorrichtung, mindestens Folgendes durchzuführen, umfasst:
Bereitstellen eines anfänglichen Standortgültigkeitstimerwertes für eine Teilnehmereinrichtung für einen verbindungslosen Dienst; und
Empfangen eines aktualisierten Standortgültigkeitstimerwertes, der mit der Kennung für einen verbindungslosen Dienst verknüpft ist, auf Basis einer Anforderung einer Teilnehmereinrichtung und der Funkzugangsnetzwerkauslegung vom Funkzugangsnetzwerk zum Speichern als Kontextinformationen für die Teilnehmereinrichtung, wodurch die Kennung für einen verbindungslosen Dienst verwendet wird, um eine Paketdatensitzung für eine Datenübermittlung mit einem verbindungslosen Modus an der Schnittstelle zwischen der Funkzugangsnetzwerkvorrichtung und der Kernnetzwerkfunktion zu identifizieren.

## Revendications

1. Appareil de réseau d'accès radio, ledit appareil comprenant des moyens (301, 302, 303, 304) pour :
recevoir (S1) une demande de configuration d'un équipement utilisateur, la demande de configuration comprenant un identifiant de service sans connexion, ce qui permet d'utiliser l'identifiant de service sans connexion pour identifier une session de données par paquets avec un transfert de données en mode sans connexion sur l'interface entre l'appareil de réseau d'accès radio et une fonction de réseau central ; et
fournir (S2), à l'équipement utilisateur et à la fonction de réseau central, une valeur de temporisateur de validité d'emplacement mise à jour basée sur la demande et une configuration de réseau d'accès radio et associée à l'identifiant de service sans connexion, pour mettre à jour une valeur de temporisateur de validité d'emplacement initiale à stocker en tant qu'informations contextuelles pour l'équipement utilisateur.

2. Appareil de réseau d'accès radio selon la revendication 1, comprenant des moyens pour déterminer si l'identifiant de service sans connexion est valide.

3. Appareil de réseau d'accès radio selon l'une quelconque des revendications 1 et 2, dans lequel une valeur de temporisateur de validité d'emplacement initiale est négociée par l'équipement utilisateur et une fonction de réseau central sur la base des informations d'abonnement de l'équipement utilisateur.

4. Appareil de réseau d'accès radio selon l'une des revendications 1 à 3, comprenant des moyens pour :
recevoir une transmission de données initiale de l'équipement utilisateur, lesdites données comprenant l'identifiant de service sans connexion ;
déterminer si l'appareil a une connexion logique avec une fonction de plan utilisateur associée à l'identifiant de service sans connexion ; et dans l'affirmative,
fournir une indication à la fonction de plan utilisateur pour démarrer le temporisateur de validité d'emplacement stocké.

5. Appareil de réseau d'accès radio selon l'une quelconque des revendications 1 à 3, comprenant des moyens pour :
recevoir une transmission de données initiale de l'équipement utilisateur, lesdites données comprenant l'identifiant de service sans connexion ;
déterminer si l'appareil a une connexion logique avec une fonction de plan utilisateur associée à l'identifiant de service sans connexion ; et
allouer, à l'équipement utilisateur, un identifiant plus court mis à jour à utiliser dans l'interface radio à la place d'un identifiant de service sans connexion pour une transmission de données sans connexion en liaison montante ultérieure et un temporisateur d'actualisation d'emplacement UE mis à jour et/ou fournir une indication à une fonction de plan de commande pour demander une mise à jour d'informations contextuelles associées au service sans connexion, si ce n'est pas le cas.

6. Appareil d'équipement utilisateur, ledit appareil comprenant des moyens (201, 202, 206) pour :
recevoir (T1) , d'une fonction de réseau central, une valeur de temporisateur de validité d'emplacement initiale pour un service sans connexion ;
fournir (T2) une demande de configuration à un premier réseau d'accès radio, la demande de configuration comprenant un identifiant de service sans connexion, ce qui permet d'utiliser l'identifiant de service sans connexion pour identifier une session de données par paquets avec un transfert de données en mode sans connexion sur l'interface entre l'appareil de réseau d'accès radio et la fonction de réseau central ; et
recevoir (T3), du premier réseau d'accès radio, une valeur de temporisateur de validité d'emplacement mise à jour basée sur la demande et une configuration de réseau d'accès radio et associée à l'identifiant de service sans connexion, à stocker en tant qu'informations contextuelles pour l'équipement utilisateur.

7. Appareil d'équipement utilisateur selon la revendication 6, dans lequel la valeur de temporisateur de validité d'emplacement initiale est négociée avec la fonction de réseau central en fonction des informations d'abonnement de l'appareil.

8. Appareil d'équipement utilisateur selon la revendication 6 ou la revendication 7, comprenant des moyens pour :
recevoir du réseau d'accès radio un identifiant plus court, à utiliser dans une interface radio à la place d'un identifiant de service sans connexion pour une transmission de données sans connexion en liaison montante ultérieure.

9. Appareil de fonction de réseau central comprenant des moyens pour :
fournir, à un équipement utilisateur, une valeur de temporisateur de validité d'emplacement initiale pour un service sans connexion ; et
recevoir du réseau d'accès radio une valeur de temporisateur de validité d'emplacement mise à jour basée sur une demande d'équipement utilisateur et une configuration de réseau d'accès radio et associée à l'identifiant de service sans connexion à stocker en tant qu'informations contextuelles pour l'équipement utilisateur, ce qui permet d'utiliser l'identifiant de service sans connexion pour identifier une session de données par paquets avec un transfert de données en mode sans connexion sur l'interface entre l'appareil de réseau d'accès radio et la fonction de réseau central.

10. Procédé effectué par un appareil de réseau d'accès radio, comprenant :
la réception (S1) d'une demande de configuration d'un équipement utilisateur, la demande de configuration comprenant un identifiant de service sans connexion, ce qui permet d'utiliser l'identifiant de service sans connexion pour identifier une session de données par paquets avec un transfert de données en mode sans connexion sur l'interface entre l'appareil de réseau d'accès radio et une fonction de réseau central ; et
la fourniture (S2), à l'équipement utilisateur et à la fonction de réseau central, d'une valeur de temporisateur de validité d'emplacement mise à jour basée sur la demande et une configuration de réseau d'accès radio et associée à l'identifiant de service sans connexion pour mettre à jour une valeur de temporisateur de validité d'emplacement initiale à stocker en tant qu'informations contextuelles pour l'équipement utilisateur.

11. Procédé effectué par un appareil d'équipement utilisateur comprenant :
la réception (T1), d'une fonction de réseau central, d'une valeur de temporisateur de validité d'emplacement initiale pour un service sans connexion ;
la fourniture (T2) d'une demande de configuration à un premier réseau d'accès radio, la demande de configuration comprenant un identifiant de service sans connexion, ce qui permet d'utiliser l'identifiant de service sans connexion pour identifier une session de données par paquets avec un transfert de données en mode sans connexion sur l'interface entre l'appareil de réseau d'accès radio et la fonction de réseau central ; et
la réception (T3), du premier réseau d'accès radio, d'une valeur de temporisateur de validité d'emplacement mise à jour basée sur la demande et une configuration de réseau d'accès radio et associée à l'identifiant de service sans connexion, à stocker en tant qu'informations contextuelles pour l'équipement utilisateur.

12. Procédé effectué par appareil de fonction de réseau central comprenant :
la fourniture, à un équipement utilisateur, d'une valeur de temporisateur de validité d'emplacement initiale pour un service sans connexion ; et
la réception, du réseau d'accès radio, d'une valeur de temporisateur de validité d'emplacement mise à jour basée sur une demande d'équipement utilisateur et une configuration de réseau d'accès radio et associée à l'identifiant de service sans connexion à stocker en tant qu'informations contextuelles pour l'équipement utilisateur, ce qui permet d'utiliser l'identifiant de service sans connexion pour identifier une session de données par paquets avec un transfert de données en mode sans connexion sur l'interface entre l'appareil de réseau d'accès radio et la fonction de réseau central.

13. Support lisible par ordinateur comprenant des instructions pour amener un appareil de réseau d'accès radio à effectuer au moins les opérations suivantes :
recevoir (S1) une demande de configuration d'un équipement utilisateur, la demande de configuration comprenant un identifiant de service sans connexion, ce qui permet d'utiliser l'identifiant de service sans connexion pour identifier une session de données par paquets avec un transfert de données en mode sans connexion sur l'interface entre l'appareil de réseau d'accès radio et une fonction de réseau central ; et
fournir (S2), à l'équipement utilisateur et à la fonction de réseau central, une valeur de temporisateur de validité d'emplacement mise à jour basée sur la demande et une configuration de réseau d'accès radio et associée à l'identifiant de service sans connexion, pour mettre à jour une valeur de temporisateur de validité d'emplacement initiale à stocker en tant qu'informations contextuelles pour l'équipement utilisateur.

14. Support lisible par ordinateur comprenant des instructions pour amener un appareil d'équipement utilisateur à effectuer au moins les opérations suivantes :
recevoir (T1) , d'une fonction de réseau central, une valeur de temporisateur de validité d'emplacement initiale pour un service sans connexion ;
fournir (T2) une demande de configuration à un premier réseau d'accès radio, la demande de configuration comprenant un identifiant de service sans connexion, ce qui permet d'utiliser l'identifiant de service sans connexion pour identifier une session de données par paquets avec un transfert de données en mode sans connexion sur l'interface entre l'appareil de réseau d'accès radio et la fonction de réseau central ; et
recevoir (T3), du premier réseau d'accès radio, une valeur de temporisateur de validité d'emplacement mise à jour basée sur la demande et une configuration de réseau d'accès radio et associée à l'identifiant de service sans connexion, à stocker en tant qu'informations contextuelles pour l'équipement utilisateur.

15. Support lisible par ordinateur comprenant des instructions pour amener un appareil de fonction de réseau central à effectuer au moins les opérations suivantes :
fournir, à un équipement utilisateur, une valeur de temporisateur de validité d'emplacement initiale pour un service sans connexion ; et
recevoir du réseau d'accès radio une valeur de temporisateur de validité d'emplacement mise à jour basée sur une demande d'équipement utilisateur et une configuration de réseau d'accès radio et associée à l'identifiant de service sans connexion à stocker en tant qu'informations contextuelles pour l'équipement utilisateur, ce qui permet d'utiliser l'identifiant de service sans connexion pour identifier une session de données par paquets avec un transfert de données en mode sans connexion sur l'interface entre l'appareil de réseau d'accès radio et la fonction de réseau central.
